Europäisches Patentamt

European Patent Office

Office européen des brevets

(11) Veröffentlichungsnummer: **0 006 551**
**B1**

(12) **EUROPÄISCHE PATENTSCHRIFT**

(45) Veröffentlichungstag der Patentschrift:
17.11.82

(21) Anmeldenummer: 79101963.1

(22) Anmeldetag: 15.06.79

(51) Int. Cl.³: **A 22 C 13/00**

(54) Schlauchförmige Hülle mit Überzug auf ihrer Innenseite sowie Verfahren zu ihrer Herstellung und Verwendung.

(30) Priorität: 24.06.78 DE 2827862

(43) Veröffentlichungstag der Anmeldung:
09.01.80 Patentblatt 80/1

(45) Bekanntmachung des Hinweises auf die Patenterteilung:
17.11.82 Patentblatt 82/46

(84) Benannte Vertragsstaaten:
AT BE CH DE FR GB IT NL SE

(56) Entgegenhaltungen:
FR-A-1 188 399
FR-A-2 020 995
FR-A-2 027 823
FR-A-2 141 324

(73) Patentinhaber: HOECHST AKTIENGESELLSCHAFT,
Postfach 80 03 20, D-6230 Frankfurt/Main 80 (DE)

(72) Erfinder: Hammer, Klaus-Dieter, Dr., Ketteler Strasse 20,
D-6500 Mainz 21 (DE)
Erfinder: Gerigk, Günter, Dr., Wintersteinstrasse 6,
D-6370 Oberursel (DE)
Erfinder: Bytzek, Max, Pappelweg 13,
D-6200 Wiesbaden-Naurod (DE)

## Schlauchförmige Hülle mit Überzug auf ihrer Innenseite sowie Verfahren zu ihrer Herstellung und Verwendung

Die Erfindung betrifft schlauchförmige Hüllen auf Basis von Cellulosehydrat mit einem Überzug aus einem Gemenge chemisch unterschiedlicher Stoffe auf der Innenseite, die leicht abziehbar vom Füllgut sind; die Erfindung umfaßt ferner ein Verfahren zur Herstellung der schlauchförmigen Hüllen und ihre Verwendung als Verpackungshülle, insbesondere als leicht vom Füllgut abziehbare künstliche Wursthaut.

Schlauchförmige Verpackungshüllen auf Basis von Cellulosehydrat mit nicht vorbehandelter Innenseite eignen sich nur bedingt zur Verwendung als Wursthüllen, weil das Wurstgut bei Frischwurst so fest an der Verpackungshülle haftet, daß diese sich bei Bedarf kaum vom Füllgut entfernen läßt; bei Dauerwurst ist Haftung dagegen so gering, daß sich die Verpackungshülle schon während des Trockenvorgangs bei der Wurstherstellung vom Wurstgut trennt. Infolge des Ablösens der Hülle vom Wurstgut beim Trocknen der Dauerwurst schrumpft die Hülle mit dem Füllgut nicht mit, die Verpackungshülle wird daher faltig und unansehnlich, Eigenschaften, die für den Verkauf der Wurst hinderlich sind.

Um diese Nachteile zu vermeiden, wurde vorgeschlagen, auf der Innenseite von Schlauchhüllen auf Basis von Cellulosehydrat eine Schicht aus chemischen Verbindungen vorzusehen, die als Trennmittel wirken, beispielsweise langkettige Isocyanate, Äthylenimine, Chrom-Fettsäurekomplexe, Silicone, perfluorierte chemische Verbindungen, Diketene und dergleichen.

Es sind künstliche Wursthüllen auf Cellulosehydratbasis für Dauerwürste bekannt, die auf ihrer Innenseite eine Schicht aus eiweißähnlichen chemischen Verbindungen aufweisen, um hinreichende Haftung zwischen Wurstmasse und Hülle zu bewirken. Derartige eiweißähnliche Verbindungen sind beispielsweise zum Stand der Technik gehörende chemisch modifizierte Eiweiße, Epichlorhydrin-Polyamin-Polyamid-Harze, Harnstoff- oder Melamin-Formaldehyd-Harze und ähnliche.

Die beschriebenen Ausrüstungsverfahren zur Präparierung der Innenseite von künstlichen Wursthüllen auf Basis von Cellulosehydrat haben jedoch den Nachteil, daß sie sehr aufwendig sind, weil für die chemische Reaktion der den Überzug bildenden chemischen Verbindung mit Cellulosehydrat meist spezifische Herstellungsbedingungen einzuhalten sind. Die bekannten Ausrüstungsverfahren erfordern zudem durchweg die Verwendung kompliziert aufgebauter chemischer Verbindungen, die relativ teuer sind.

Häufig besteht auch die Gefahr, daß das die Schlauchhülle bildende Cellulosehydrat bei Verwendung der genannten chemischen Verbindungen in unerwünschter und unkontrollierbarer Weise vernetzt wird, wodurch Versprödung der Schlauchhülle eintritt, wodurch bei der bestimmungsgemäßen Verwendung der Schlauchhülle, beispielsweise beim Raffen, Brüche oder Löcher in der Schlauchwand auftreten können.

Der vorliegenden Erfindung liegt nun die Aufgabe zugrunde, schlauchförmige Verpackungshüllen, insbesondere faserverstärkte, auf Basis von Cellulosehydrat vorzuschlagen, bei denen auf der Innenseite ein Überzug aus chemischem Material vorgesehen ist, das nicht durch chemische Reaktion mit dem die Schlauchhülle bildenden Cellulosehydrat verknüpft ist und Vernetzung von Cellulosehydratmolekülen ausschließt, und wobei durch den Überzug aus nicht zur chemischen Reaktion mit Cellulosehydrat befähigten chemischen Verbindungen zugleich ein guter Trenneffekt zwischen Füllgut, insbesondere Wurstmasse, und Schlauch sowie Gleitwirkung und Weichmachung des Schlauchs eintritt.

Für die Verwendung der erfindungsgemäßen Schlauchhülle als Verpackungshülle für Lebensmittel ist es Voraussetzung, daß die den Überzug bildenden chemischen Stoffe toxikologisch unbedenklich sind.

Die der Erfindung zugrundeliegende Aufgabe wird gelöst durch eine schlauchförmige Hülle mit den im Anspruch 1 genannten Merkmalen sowie durch die im Anspruch 7 angegebene Verwendung und das im Anspruch 8 beschriebene Verfahren. Die Unteransprüche geben bevorzugte Ausführungsformen der Schlauchhülle bzw. des Verfahrens an.

Es ist zwar bereits Stand der Technik (FR-A-2 141 324), eine schlauchförmige Nahrungsmittelhülle auf Cellulosebasis auf ihrer Innenseite mit einem Überzug aus einem Gemisch von wasserlöslichem Celluloseäther und z. B. einem tierischen oder pflanzlichen Öl zu versehen. Celluloseäther unterscheiden sich jedoch sowohl makroskopisch als auch im molekularen Bereich wesentlich von Stärkeäthern, so daß die zur Lösung der erfindungsgemäßen Aufgabe erforderliche Wirkung nicht vorhersehbar ist.

Die Herstellung von schlauchförmigen, insbesondere faserverstärkten Hüllen auf Basis von Cellulosehydrat ist bekannt und nicht Gegenstand der vorliegenden Erfindung.

Verfahren zur Innenbeschichtung von Cellulosehydratschläuchen sind ebenfalls beschrieben, beispielsweise in GB-PS 1 201 830 sowie US PSen 2 901 358 und 3 378 379, und als solche nicht Gegenstand der vorliegenden Erfindung.

Der Überzug auf der Schlauchinnenseite besteht aus einem Gemenge chemischer Stoffe auf Basis von Triglyceridgemischen von pflanzlichen Fettsäuren mit einer Kohlenstoffkettenlänge im Bereich von 4 bis 14 Kohlenstoffatome und/oder aus natürlichen Ölen und einer zweiten Komponente, die den mengenmäßig geringeren Anteil des Gemenges darstellt, umfassen nichtreaktive hydrophile wasserlösliche oder wasserquellbare chemisch modifizierte Stärke und/oder mikrokristalline Cellulose und/oder teilverseiften wasserlöslichen, bevorzugt hochmolekularen, Polyvinylalkohol.

Der Überzug umfaßt dabei insgesamt 20 bis 200 mg erste Kompenente und insgesamt 5 bis 150 mg zweite Komponente, jeweils bezogen auf m²Trägeroberfläche.

Die zweite Komponente bildet den Trennmittelanteil und die erste Komponente den Gleitmittelanteil des den Überzug bildenden Gemenges chemisch unterschiedlicher Verbindungen. Die erfindungsgemäß angestrebte Wirkung ist auf den synergistischen Effekt zurückzuführen, der sich aus der erfindungsgemäßen Stoffkombination von erster und zweiter Komponente ergibt.

Als erfindungsgemäß geeignete chemisch modifizierte Stärken sind Stärkederivate zu verstehen, die durch Verätherung, Veresterung oder Vernetzung von Stärke erhalten werden, sowie Abbauprodukte der Stärke, insbesondere Dextrine, Dextrane, Alkylstärkeäther, Carboxymethylstärkeäther, Hydroxyalkylstärkeäther, insbesondere Methylstärkeäther, Äthylstärkeäther, Hydroxymethylstärkeäther, Hydroxypropylstärkeäther, Äthyl-Methylstärkeäther sowie Carboxymethylhydroxyäthylstärkeäther. Die genannten Stärken können jeweils einzeln oder in Abmischung Bestandteil des Überzugs sein.

Der Überzug kann im Rahmen der Erfindung neben natürlichen Ölen und/oder Triglyceridgemischen pflanzlicher Fettsäuren mit einer Kohlenstoffanzahl im Bereich von 4 bis 14 Kohlenstoffatomen als erste Komponente mikrokristalline Cellulose und/oder Polyvinylalkohol als zweite Komponente enthalten.

Geeignete Polyvinylalkohole sind vorteilhaft solche, die zu wenigstens 88%, insbesondere zu 88 bis 99%, freie OH-Gruppen, d. h. solche, die nicht verestert sind, aufweisen. Die prozentualen Angaben beziehen sich jeweils auf die Gesamtzahl im Molekül insgesamt vorhandener RO-Gruppen, in denen R jeweils Wasserstoff oder ein Säurerest ist. Polyvinylalkohole mit hohen Molekulargewicht sind bevorzugt. Unter teilverseiftem Polyvinylalkohol sind chemische Verbindungen zu verstehen, wie sie in »Römpps Chemie-Lexikon«, Franckh'sche Verlagsbuchhandlung, Stuttgart, 7. Auflage, 1977, Seite 2276, unter dem Stichwort »Polyvinylalkohol« beschrieben sind.

Bei höheren als den angegebenen Konzentrationen der den Überzug bildenden chemischen Stoffe tritt keine Effektsteigerung ein. Vielmehr ist es dann sogar möglich, daß es zu unerwünschtem Gelee- oder Fettabsatz an der Innenseite der Hüllenwand kommt.

Insbesondere bevorzugte natürliche Öle sind Leinöl, Olivenöl, Sonnenblumenöl, Rüböl, Palmöl und Kokosöl. Das bevorzugte Triglyceridgemisch pflanzlicher Fettsäuren enthält vorzugsweise gesättigte Fettsäuren, insbesondere mit einer Kettenlänge von 4 bis 12, vorzugsweise 6 bis 10 Kohlenstoffatomen. Der Ölanteil des Überzugs kann auch aus einer Abmischung genannter bevorzugter natürlicher Öle bestehen.

Der Überzug enthält — bedingt durch das Herstellungsverfahren — chemischen Emulgator in solchen Mengen, daß die angestrebten Eigenschaften des Überzugs bzw. der Schlauchhülle mit Überzug auf der Innenseite nicht beeinflußt werden. Derartige Emulgatoren sind beispielsweise Äthoxylate oder Propoxylate natürlicher Fettsäuren, wie sie beispielsweise durch Verseifung der natürlichen Öle, Sojaöl, Leinöl, Rhizinusöl u. ä., erhalten werden, sowie Mono- oder Diester natürlicher Fettsäuren mit mehrwertigen Alkoholen, wie beispielsweise Glycerin, Pentaerithryt, Sorbit, Mannit, u. ä., aber auch toxikologisch unbedenkliche, lebensmittelrechtlich zugelassene synthetische Emulgatoren, wie Alkyl-, Alkyl-aryl-sulfate oder -sulfonate.

Nachfolgend wird die Herstellung einer erfindungsgemäßen Hülle beispielhaft beschrieben.

Ausgangsmaterial ist eine Schlauchhülle aus Cellulosehydrat, die nach bekannten Verfahren herstellbar ist. Eine bestimmte Länge, beispielsweise 350 m, eines derartigen Schlauchs wird, beispielsweise nach einem der vorerwähnten bekannten Verfahren, fortlaufend auf der Innenseite mit wäßriger Flüssigkeit beschichtet, die chemisch modifizierte Stärke und Triglyceride von pflanzlichen Fettsäuren enthält. Der Schlauch wird dann wie beschrieben getrocknet und danach gegebenenfalls mit Wasser derart befeuchtet, daß er einen Wassergehalt im Bereich von 8 bis 10 Gew.-% Wasser, bezogen auf das Gesamtgewicht des Schlauchs, enthält.

Die zur Beschichtung der Innenseite des Cellulosehydratschlauchs verwendete wäßrige Flüssigkeit wird beispielsweise wie folgt hergestellt:

In 1 l Wasser werden insgesamt 2 bis 80 g chemisch modifizierte Stärke, beispielsweise Carboxymethylstärke, unter Rühren gelöst. Der Lösung werden insgesamt 2 bis 20 g chemischer Emulgator, beispielsweise Sojafettsäure und 12 Äthylenoxyd, zugefügt. In die Lösung werden unter starkem Rühren insgesamt im Bereich von 20 bis 200 g Triglyceride gut emulgiert.

Die Trocknung des Schlauchs erfolgt im Temperaturbereich zwischen 90 bis 120° C.

Um stabile Öl-Emulsionen zu erhalten, sind Emulgatoren in einer Menge von 5 bis 20 Gew.-%, vorzugsweise von 8 bis 12 Gew.-%, bezogen auf das Gesamtgewicht vorhandenen Triglycerids oder 0,2 bis 2 Gew.-%, bezogen auf das Gesamtgewicht der Lösung, erforderlich.

Als insbesondere bevorzugte Emulgatoren haben sich äthoxylierte Soja-Fettsäuren (52,5% Linolsäure, 33,5% Ölsäure, Palmitinsäure, Linolensäure und Arachinsäure+12 Mol Äthylenoxid), äthoxylierte Rhizinusölsäure (86% Rhizinusölsäure, 9% Ölsäure, 2 bis 3% Linolsäure, 2% Stearinsäure + 36 Mol Äthylenoxid) sowie äthoxylierte Ölsäuren erwiesen.

Die chemisch modifizierte Stärke sowie Triglyceride enthaltende Flüssigkeit kann bei Bedarf auch unmittelbar vor dem Raffen eines Schlauchs zu einer sogenannten Schlauchraupe mit Hilfe bekannter Raffverhalten und bekannter Raffvorrichtungen aufgebracht werden, beispielsweise dadurch, daß man die Flüssigkeit durch den hohlen Raffdorn in den Hohlraum des zu raffenden Schlauchs einsprüht.

Die verfahrensgemäß hergestellten Schlauchhüllen lassen sich bei Verwendung als künstliche Wursthülle für Frischwurst hervorragend vom Füllgut abziehen; lästiges Abreiben beim Abziehen tritt dabei nicht auf, da die Schlauchhülle nicht versprödet ist.

Insbesondere geeignet sind die erfindungsgemäßen Verpackungshüllen zur Verwendung bei der Herstellung von Würsten in sogenanntem »Schäldarm«; bei derartigen Würsten werden die Hüllen vor dem Verkauf der Würste bzw. vor ihrer Weiterverarbeitung maschinell von der Hüllmasse entfernt. Die leichte Ablösbarkeit der erfindungsgemäßen Verpackungshüllen von der Wurstmasse erleichtert die störungsfreie maschinelle Ablösung der Schlauchhüllen vom Füllgut, d. h. Abrisse durch anhaftendes Wurstbrät oder Verletzung der Hülle durch mechanische Einwirkung auf diese tritt nicht auf. Durch die Mitverwendung von Triglyceriden im Überzug der Hülle wird auch das Nachbehandeln und Verarbeiten der Schläuche, beispielsweise Raffen, erleichtert.

Die schlauchförmigen Verpackungshüllen verkleben beim Lagern, zu einer Rolle aufgewickelt, nicht, eine Eigenschaft, die für nachfolgendes Raffen der Schlauchhüllen von Bedeutung ist. Sie lassen sich als Abschnitte bei der Verarbeitung ohne Schwierigkeiten öffnen, was bei der Verarbeitung größerer Kaliber schlauchförmiger Verpackungshüllen als künstliche Wursthülle von Bedeutung ist, da diese einseitig abgebunden verarbeitet werden. Für die Weiterverarbeitung schlauchförmiger Hüllen gemäß der Erfindung als künstliche Wursthüllen ist es für den Raffvorgang zur Herstellung von Schlauchraupen, beim Abbinden und bei der Weiterverarbeitung der Schläuche wichtig, daß diese geschmeidig und weich sind. Der erfindungsgemäße Schlauch besitzt diese Eigenschaften in hohem Maße.

Erfindungsgemäße schlauchförmige Verpackungshüllen füllen bei ihrer Verwendung als künstliche Wursthüllen insofern eine Marktlücke aus, als sie für Wursttypen, die für alsbaldigen Verbrauch bestimmt sind, insbesondere geeignet sind, beispielsweise für Bockwürste, Fleischwürste, grobe und feine Mettwurst und ähnliche.

Der Überzug auf der Innenseite der erfindungsgemäßen Verpackungshülle weist nicht den zu starken Trenneffekt bekannt. hydrophober Schichten und nicht die zu starke Bindung des Füllgutes an die Wursthülle bekannter eiweißähnlicher Innenschichten auf, sondern stellt eine vorteilhafte Kombination beider dar.

Beispiel 1

In 1 l Wasser werden unter Rühren 12 g Carboxymethylstärke und 15 g Sojafettsäure + 12 Äo gelöst. In der Flüssigkeit werden dann 150 g eines Triglyceridgemisches gesättigter pflanzlicher Fettsäuren mit im Bereich von 4 bis 12 Kohlenstoffatomen (beispielsweise ®Miglyol 812; Dynamit Nobel AG) durch Einrühren gut emulgiert.

Zur Ausrüstung der Innenseite der Schlauchhülle aus Cellulosehydrat wird diese Flüssigkeit in einen Cellulosehydratschlauch einer Länge von etwa 350 m vom Kaliber 40 in der Weise eingefüllt, daß sich die gesamte Flüssigkeitsmenge innerhalb eines bestimmten Hohlraumbereichs des Schlauchs befindet. Die Innenbeschichtung des Schlauchs erfolgt dann beispielsweise nach dem Verfahren, das in der GB-PS 1 201 830 beschrieben ist.

Die Trocknung des Schlauchs erfolgt durch fortlaufendes Hindurchführen des innenbeschichteten Schlauchs durch einen Trockenkanal, die Trockentemperatur liegt dabei im Bereich von 90 bis 120°C. Nach dem Verlassen des Trockners wird der Schlauch durch Besprühen mit Wasser derart befeuchtet, daß er ca. 8 bis 10 Gew.-% Wasser, bezogen auf sein Gesamtgewicht, aufweist. Der Schlauch wird dann aufgerollt.

Beim Flachpressen des Schlauchs zwischen Daumen und Zeigefinger einer Hand lassen sich die aneinandergrenzenden Schlauchinnenseiten leicht gegeneinander verschieben. Haften der Schlauchwände aneinander tritt auch nach längerem Lagern des Schlauchs nicht auf. Der Schlauch läßt sich ohne Schwierigkeiten raffen, es treten dabei keine Beschädigungen desselben auf. Die durch Raffen des Schlauchs herstellbaren Raupen lassen sich auf üblichen Abfüllmaschinen für Wurstmasse problemlos verarbeiten. Von der Wurst bzw. dem Füllgut sind die künstlichen Hüllen dann, ohne zu reißen oder am Füllgut zu haften, sehr gut wieder ablösbar.

Beispiel 2

In 1 l Wasser werden 15 g propoxylierte Stärke und 1,0 g Rhizinusöl + 36 Äo gelöst. Unter intensivem Rühren werden in dieser Lösung 150 g eines Triglyceridgemisches gesättigter pflanzlicher Fettsäuren mit einer Kohlenstoffanzahl im Bereich von 4 bis 12 (beispielsweise ®Miglyol 812; Dynamit Nobel AG) emulgiert.

Mit dieser Flüssigkeit wird ein im Gelzustand befindlicher Schlauch aus Cellulosehydrat vom Kaliber 38, wie in Beispiel 1 angegeben innenbeschichtet. Als im Gelzustand wird eine Cellulosehydratschlauchhülle bezeichnet, die, ohne vorher getrocknet worden zu sein, einen Wassergehalt von ca. 300 Gew.-%, bezogen auf das Gesamtgewicht des Schlauchs, aufweist.

Das hergestellte Erzeugnis zeichnet sich durch gute Verarbeitbarkeit bei der Herstellung von Würsten aus und ist dadurch charakterisiert, daß sich die künstliche Wursthülle von der in sie eingeschlossenen Masse bei Bedarf sehr leicht abschälen läßt, ohne daß die Schlauchhülle dabei reißt oder daß Wurstmasse an der Schlauchhülle haftet.

Beispiel 3

Es wird eine Flüssigkeit gemäß Beispiel 1 verwendet und vor dem Trocknereingang in einen Kranzdarm (rundgeformter Celluloseschlauch) vom Kaliber 42 eingebracht und bei einer Geschwindigkeit von 10 m/min. in schwach aufgeblasenem Zustand getrocknet.

Beim Raffen wird der Schlauch auf 16% angefeuchtet. Beim Füllen von grober Mettwurst treten keine Beschädigungen auf. Die Hüllen lassen sich hervorragend abschälen.

Beispiel 4

Ein Schlauch aus Cellulosehydrat wird wie in Beispiel 1 beschrieben innenbeschichtet. Die Behandlungsflüssigkeit wird wie folgt hergestellt:

15 g Polyvinylalkohol (beispielsweise ®Mowiol N 30–88; Hoechst AG) mit einem Verseifungsgrad von 88% und 15 g Sojafettsäure + 12 Äo werden unter Rühren in 1 l Wasser gelöst. Zu dieser Lösung werden unter starkem Rühren 160 g Olivenöl gut emulgiert.

Beispiel 5

Ein Schlauch aus Cellulosehydrat wird wie in Beispiel 1 beschrieben innenbeschichtet. Die Behandlungsflüssigkeit wird wie folgt hergestellt:

18 g mikrokristalline Cellulose (®Avicell; Rettenmeyer) und 16 g Polyoxyäthylen-sorbitan-monooleat (®Tween 80; Atlas Chemie GmbH) werden unter Rühren in 1 l Wasser gelöst. In dieser Lösung werden unter starkem Rühren 160 g Olivenöl gut emulgiert.

**Patentansprüche**

1. Schlauchförmige Hülle auf Basis von Cellulosehydrat mit Überzug aus einem Gemenge chemisch unterschiedlicher Stoffe auf der Innenseite, dadurch gekennzeichnet, daß der Überzug aus einem Triglyceridgemisch mit pflanzlichen Fettsäuren einer Kohlenstoffkettenlänge im Bereich von 4 bis 14 Kohlenstoffatomen und/oder aus natürlichen Ölen, als erster, den mengenmäßig überwiegenden Anteil bildender Komponente, und aus chemisch modifizierter Stärke und/oder teilverseiftem Polyvinylalkohol und/oder mikrokristalliner Cellulose, als zweiter, den mengenmäßig geringeren Anteil bildender Komponente, besteht.

2. Schlauchhülle nach Anspruch 1, dadurch gekennzeichnet, daß das Triglyceridgemisch gesättigte Fettsäuren, insbesondere mit einer Kettenlänge von 6 bis 10 Kohlenstoffatomen, enthält.

3. Schlauchhülle nach Anspruch 1 oder 2, dadurch gekennzeichnet, daß die chemisch modifizierte Stärke Dextrine, Dextrane, Alkylstärkeäther, Carboxymethylstärkeäther, Hydroxyalkylstärkeäther oder Mischungen dieser chemisch modifizierten Stärken umfaßt.

4. Schlauchhülle nach Anspruch 3, dadurch gekennzeichnet, daß das Gemenge als Stärkeäther Methylstärkeäther, Äthylstärkeäther, Hydroxymethylstärkeäther, Hydroxypropylstärkeäther, Äthylmethylstärkeäther sowie Carboxymethylstärkeäther enthält.

5. Schlauchhülle nach einem der Ansprüche 1 bis 4, dadurch gekennzeichnet, daß die erste Komponente des Überzugs als natürliche Öle Olivenöl, Rüböl, Palmöl, Kokosöl, Leinöl, Sonnenblumenöl oder Mischungen dieser Öle umfaßt.

6. Schlauchhülle nach einem der Ansprüche 1 bis 5, dadurch gekennzeichnet, daß das den Überzug bildende Gemenge aus insgesamt im Bereich von 20 bis 200 mg erster Komponente sowie insgesamt im Bereich von 5 bis 150 mg zweiter Komponente, jeweils pro m² Schlauchoberfläche, besteht.

7. Verwendung einer schlauchförmigen Hülle nach einem der Ansprüche 1 bis 6 als Verpackungsmittel, insbesondere als künstliche Wursthaut.

8. Verfahren zur Herstellung schlauchförmiger Hüllen gemäß den Ansprüchen 1 bis 6, dadurch gekennzeichnet, daß man auf die Innenseite eines Schlauchs auf Basis von Cellulosehydrat wäßrige Flüssigkeit, enthaltend im Bereich von 0,2 bis 8 Gew.-%, bezogen auf das Gesamtgewicht der Flüssigkeit, der zweiten Komponente sowie 2 bis 20 Gew.-%, bezogen auf das Gesamtgewicht der Flüssigkeit, der ersten Komponente, aufbringt und danach den flüchtigen Anteil der Flüssigkeit vertreibt, wobei die zur Einwirkung gelangende Flüssigkeitsmenge derart gewählt wird, daß der nach Vertreiben des flüchtigen Anteils der Flüssigkeit auf der Schlauchoberfläche verbleibende Überzug aus einem Gemenge chemischer Stoffe besteht, das insgesamt im Bereich von 20 bis 200 mg an erster Komponente und insgesamt im Bereich von 5 bis 150 mg an zweiter Komponente, jeweils pro m² Schlauchoberfläche, umfaßt.

9. Verfahren nach Anspruch 8, dadurch gekennzeichnet, daß die wäßrige Flüssigkeit chemischen Emulgator enthält.

10. Verfahren nach Anspruch 9, dadurch gekennzeichnet, daß die wäßrige Flüssigkeit 0,2 bis 2 Gew.-%, bezogen auf das Gesamtgewicht, chemischen Emulgator, umfassend Äthoxylate oder Propoxylate natürlicher Fettsäuren, Mono- oder Diester natürlicher Fettsäuren mit aliphatischen Polyalkoholen sowie Alkyl-, Alkyl-aryl-sulfonate oder -sulfate, enthält.

## Claims

1. A tubular casing based on cellulose hydrate, having a coating of a mixture of chemically different compounds on its inner surface, said coating comprising a triglyceride mixture of vegetable fatty acids having from 4 to 14 carbon atoms in their carbon chain and/or of natural oils as the first, quantitatively major component and a chemically modified starch, and/or a partially saponified polyvinyl alcohol and/or a microcrystalline cellulose as the secound, quantitatively minor component.

2. A tubular casing as claimed in claim 1, wherein the triglyceride mixture comprises saturated fatty acids, particularly those having from 6 to 10 carbon atoms in their carbon chain.

3. A tubular casing as claimed in claim 1 or claim 2, wherein the chemically modified starch comprises a dextrine, a dextrane, an alkyl starch ether, a carboxymethyl starch ether, a hydroxyalkyl starch ether or mixtures of these chemically modified starches.

4. A tubular casing as claimed in claim 3, wherein the mixture comprises as the starch ether a methyl starch ether, an ethyl starch ether, a hydroxymethyl starch ether, a hydroxy propyl starch ether, an ethylmethyl starch ether, and a carboxymethyl starch ether.

5. A tubular casing as claimed in any of claims 1 to 4, wherein the first component of the coating comprises as the natural oil olive oil, rape oil, palm oil, coconut oil, linseed oil, sunflower oil, or mixtures of these oils.

6. A tubular casing as claimed in any of claims 1 to 5, wherein the mixture forming the coating comprises a total of between 20 and 200 mg of the first component and between 5 and 150 mg of the second component, each calculated per square meter of the surface of the tube.

7. Use of a tubular casing as claimed in any of claims 1 to 6 as a packaging material, particularly as an artificial sausage casing.

8. A process for the preparation of tubular casings as claimed in claims 1 to 6, comprising the steps of coating the inside of a tube based on cellulose hydrate with an aqueous liquid comprising from 0.2 to 8 per cent by weight, based on the total weight of the liquid, of the second component and from 2 to 20 per cent by weight, based on the total weight of the liquid, of the first component and then evaporating the volatile constituents of the liquid, the quantity of liquid applied being selected so that the coating formed on the surface of the tube evaporation of the volatile contituents comprises a mixture of chemical compounds comprising a total of from 20 to 200 mg of the first component and a total of from 5 to 150 mg of the second component, each calculated per square meter of the surface of the tube.

9. A process as claimed in claim 8, wherein the aqueous liquid comprises a chemical emulsifier.

10. A process as claimed in claim 9, wherein the aqueous liquid comprises from 0.2 to 2 per cent by weight, calculated on the total weight, of a chemical emulsifier selected from the group consisting of an ethyoxylate or propoxylate of a natural fatty acid, a monoester or diester of a natural fatty acid with an aliphatic polyalcohol, an alkyl- or alkyl-aryl-sulfonate, and an alkyl- or alkyl-aryl-sulfate.

## Revendications

1. Enveloppe tubulaire à base d'hydrate de cellulose revêtue sur sa surface interne d'un mélange de substances chimiquement différentes, caractérisée en ce que le revêtement est constitué par un mélange de triglycérides d'acides gras végétaux ʼ15ʼ ( la chaîne d'atomes de carbone a une longeueur comprise entre 4 et 14 atomes de carbone et/ou par des huiles naturelles, ent tant que premier constituant, pondéralement majoritaire, et par de l'amidon chimiquement modifié et/ou par de l'alcool polyvinylique partiellement saponifié et/ou par de la cellulose microcristalline en tant que second composant, pondéralement minoritaire.

2. Enveloppe tubulaire selon la revendication I caractérisée en ce que le mélange de triglycérides renferme en particulier des acides gras saturés ayant une longueur de chaîne de 6 à 10 atomes des carbone.

3. Enveloppe tubulaire selon la revendication 1 ou 2, caractérisée en ce que par amidon chimiquement modifié on entend la dextrine, le dextrane, les éthers d'alkylamidon, les éthers de carboxyméthylamidon, les éthers d'hydroxyalkyl-amidon ou des mélanges de ces amidons chimiquement modifiés.

4. Enveloppe selon la revendication 3, caractérisée en ce que le mélange contient comme éther d'amidon, un éther de méthylamidon, un éther d'éthylamidon, un éther d'hydroxyméthylamidon, un éther d'hydroxy-propyl-amidon, un éther d'éthylméthylamidon ainsi qu'un ether de carboxyméthylamidon.

5. Enveloppe tubulaire selon l'une des revendications 1à 4, caractérisée en ce que le premier composant du revêtement renferme en tant qu'huile naturelle de l'huile d'olive, de l'huile de colza, de l'huile de palme, de l'huile de coco, de l'huile de lin, de l'huile de tournesol ou des mélanges de ces huiles.

6. Enveloppe tubulaire selon l'une des revendications 1 à 5 caractérisée en ce que le mélange formant le revêtement comprend au total entre 20 et 200 mg du premier composant et au total entre 5 et 150 mg du second composant, chaque fois par m² de surface du tube.

7. Utilisation d'une enveloppe tubulaire selon l'une des revendications 1 à 6 comme moyen d'emballage, en particulier comme boyau de saucisse artificiel.

8. Procédé pour la fabrication d'enveloppes tubulaires selon les revendications 1 à 6 caractérisé en ce que l'on applique sur la surface interne d'un tube à base d'hydrate de cellulose un liquide aqueux contenant entre 0,2 et 8% en poids, par rapport au poids total du liquide, du second composant, ainsi que 2 à 20% en poids, par rapport au poids total du liquide, du premier composant, et qu'on évapore ensuite la fraction volatile du liquide, la quantité de liquide pour le traitement étant choisie de telle façon que le revêtement restant sur la surface du tube après l'évaporation de la fraction volatile du liquide soit composé d'un mélange de substances chimiques renfermant au total entre 20 et 200 mg du premier composant et au total entre 5 et 150 mg du second composant, chaque fois par m² de surface du tube.

9. Procédé selon la revendication 8, caractérisé en ce que le liquide aqueux contient un émulsifiant chimique.

10. Procédé selon la revendication 9, caractérisé en ce que le liquide aqueux contient entre 0,2 à 2% en poids, par rapport au poids total, d'un émulsifiant chimique choisi parmi les éthoxylates et propoxylates d'acides gras naturels, les mono-esters et les diesters d'acides gras naturels avec des polyalcools aliphatiques aninsi que les alkylsulfonates, les alkylarylsulfonates, les alkylsulfates et les alkylarylsulfates.